# EUROPEAN PATENT APPLICATION

(11) **EP 2 530 987 A1**
(43) Date of publication of application: **05.12.2012**
(21) Application number: 11168650.7
(22) Date of filing: 03.06.2011
(51) Int. Cl.: H04W 72/04

(54) **Apparatus and method to select radio access parameters between communication devices**

(71) Applicant: NOKIA CORPORATION, 02150 Espoo (FI)
(72) Inventor: Aho, Eero, 33820 Tampere (FI); Luoma, Juha-Pekka, 33210 Tampere (FI); Ruutu, Jussi, 02210 Espoo (FI); Oksanen, Markku, 00940 Helsinki (FI)
(74) Representative: Aarnio, Ari Antero

(57) **Abstract**

An apparatus, method and system configured to select radio access parameters between communication devices. In one embodiment, an apparatus includes a processor (720) and memory (750) including computer program code. The memory (750) and the computer program code are configured to, with the processor (720), cause the apparatus to determine an estimated data rate between a first endpoint communication device and a second endpoint communication device, and select at least one of a radio interface and a radio interface data rate from the first endpoint communication device in accordance with the estimated data rate.

## Description

### TECHNICAL FIELD

The present invention is directed, in general, to communication systems and, in particular, to an apparatus, method and system configured to select radio access parameters between communication devices.

### BACKGROUND

Long term evolution ("LTE") of the Third Generation Partnership Project ("3GPP"), also referred to as 3GPP LTE, refers to research and development involving the 3GPP LTE Release 8 and beyond as part of an ongoing effort across the industry aimed at identifying technologies and capabilities that can improve systems such as the universal mobile telecommunication system ("UMTS"). The notation "LTE-A" is generally used in the industry to refer to further advancements in LTE. The goals of this broadly based project include improving communication efficiency, lowering costs, improving services, making use of new spectrum opportunities, and achieving better integration with other open standards.

The evolved universal terrestrial radio access network ("E-UTRAN") in 3GPP includes base stations providing user plane (including packet data convergence protocol/radio link control/media access control/physical ("PDCP/RLC/MAC/PHY") sublayers) and control plane (including radio resource control ("RRC") sublayer) protocol terminations towards wireless communication devices such as cellular telephones. A wireless communication device or terminal is generally known as user equipment (also referred to as "UE"). A base station is an entity of a communication system or network often referred to as a Node B or an NB. Particularly in the E-UTRAN, an "evolved" base station is referred to as an eNodeB or an eNB. For details about the overall architecture of the E-UTRAN, see 3GPP Technical Specification ("TS") 36.300 v8.7.0 (2008-12), which is incorporated herein by reference. For details of the radio resource control management, see 3GPP TS 25.331 v.9.1.0 (2009-12) and 3GPP TS 36.331 v.9.1.0 (2009-12), which are incorporated herein by reference.

As wireless communication systems such as cellular telephone, satellite, and microwave communication systems become widely deployed and continue to attract a growing number of users, there is a pressing need to accommodate a large and variable number of communication devices that transmit an increasing quantity of data within a fixed spectral allocation and limited transmit power. The increased quantity of data is a consequence of wireless communication devices transmitting video information and surfing the Internet, as well as performing ordinary voice communication. The aforementioned services are provided while accommodating substantially simultaneous operation of a large number of wireless communication devices. Accordingly, there is a need to efficiently utilize the limited communication resources of a communication system.

When user equipment (a first endpoint communication device) connects to a server or even another user equipment (a second endpoint communication device), the data rate or other communication quality measure is not necessarily determined by radio access network capability, but rather can be determined by the communication system load, server load, or other variable or static factors. One of the unresolved issues is how to manage unnecessarily reserved communication resources that can potentially be employed by other user equipment in a communication system. In view of the growing deployment and utilization of communication systems such as cellular and WLAN communication systems, it would be beneficial to allocate to the radio access network communication resources sufficient to handle a communication need, and redistribute or otherwise make available for other purposes any communication resources that are released by such disposition. Accordingly, what is needed in the art is a system and method configured to select radio access parameters between communication devices that addresses an efficient allocation of communication resources in a communication system.

### SUMMARY OF THE INVENTION

These and other problems are generally solved or circumvented, and technical advantages are generally achieved, by embodiments of the present invention, which include an apparatus, method and system configured to select radio access parameters between communication devices. In one embodiment, an apparatus includes a processor and memory including computer program code. The memory and the computer program code are configured to, with the processor, cause the apparatus to determine an estimated data rate between a first endpoint communication device and a second endpoint communication device, and select at least one of a radio interface and a radio interface data rate from the first endpoint communication device in accordance with the estimated data rate.

The foregoing has outlined rather broadly the features and technical advantages of the present invention in order that the detailed description of the invention that follows may be better understood. Additional features and advantages of the invention will be described hereinafter, which form the subject of the claims of the invention. It should be appreciated by those skilled in the art that the conception and specific embodiment disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

For a more complete understanding of the invention, and the advantages thereof, reference is now made to the following descriptions taken in conjunction with the accompanying drawings, in which:
FIGUREs 1 and 2 illustrate system level diagrams of embodiments of communication systems including a base station and wireless communication devices that provide an environment for application of the principles of the present invention;
FIGUREs 3 to 6 illustrate system level diagrams of embodiments of communication systems including wireless communication systems that provide an environment for application of the principles of the present invention;
FIGURE 7 illustrates a system level diagram of an embodiment of a communication element of a communication system for application of the principles of the present invention;
FIGURE 8 illustrates a flowchart demonstrating an exemplary method of operating a base station according to the principles of the present invention; and
FIGURE 9 illustrates a flowchart demonstrating an exemplary method of operating a user equipment according to the principles of the present invention.

### DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention. In view of the foregoing, the present invention will be described with respect to exemplary embodiments in a specific context of an apparatus, method and system to select radio access parameters between communication devices and manage communication resources in a communication system. The apparatus, method and system are applicable, without limitation, to any communication system including existing and future cellular technologies including 3GPP technologies (i.e., UMTS, LTE, and its future variants such as 4th generation ("4G") communication systems) and a wireless local area network ("WLAN") operable under IEEE Standard 802.11 (or a worldwide interoperability for microwave access ("WiMAX") communication system operable under IEEE Standard 802.16). Additionally, WLAN communications, communication systems, modules, modes or the like generally include non-cellular equivalents such as, without limitation, technologies related to WiMAX, WiFi, industrial, scientific and medical ("ISM"), white spaces, Internet protocol datacasting, Bluetooth and Zigbee.

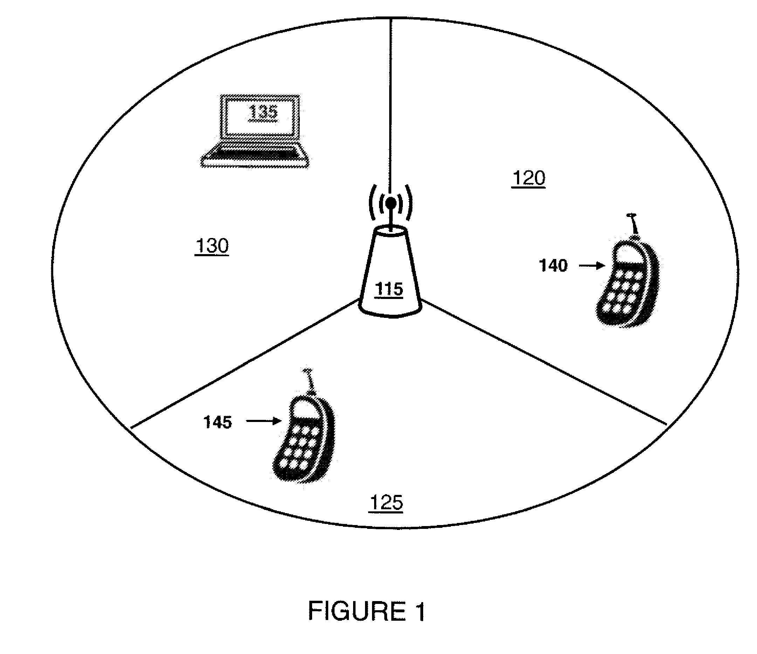

Turning now to FIGURE 1, illustrated is a system level diagram of an embodiment of a communication system including a base station 115 and wireless communication devices (e.g., user equipment) 135, 140, 145 that provides an environment for application of the principles of the present invention. The base station 115 is coupled to a public switched telephone network (not shown). The base station 115 is configured with a plurality of antennas to transmit and receive signals in a plurality of sectors including a first sector 120, a second sector 125, and a third sector 130, each of which typically spans 120 degrees. Although FIGURE 1 illustrates one wireless communication device (e.g., wireless communication device 140) in each sector (*e.g.* the first sector 120), a sector *(e.g.* the first sector 120) may generally contain a plurality of wireless communication devices. In an alternative embodiment, a base station 115 may be formed with only one sector (e.g. the first sector 120), and multiple base stations may be constructed to transmit according to co-operative multi-input/multi-output ("C-MIMO") operation, etc.

The sectors (e.g. the first sector 120) are formed by focusing and phasing radiated signals from the base station antennas, and separate antennas may be employed per sector (e.g. the first sector 120). The plurality of sectors 120, 125, 130 increases the number of subscriber stations (e.g., the wireless communication devices 135, 140, 145) that can simultaneously communicate with the base station 115 without the need to increase the utilized bandwidth by reduction of interference that results from focusing and phasing base station antennas. While the wireless communication devices 135, 140, 145 are part of a primary communication system, the wireless communication devices 135, 140, 145 and other devices such as machines (not shown) may be a part of a secondary communication system to participate in, without limitation, device-to-device and machine-to-machine communications or other communications.

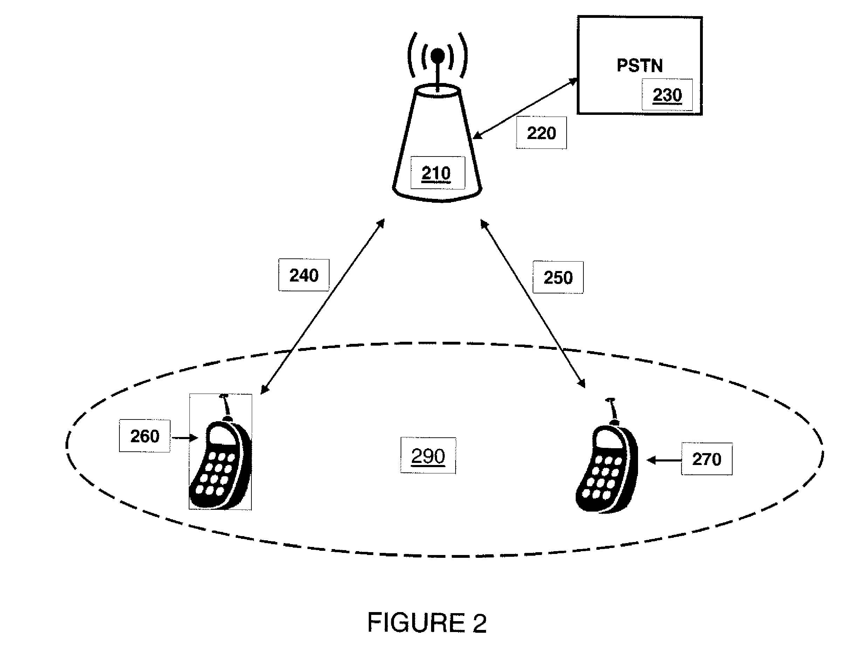

Turning now to FIGURE 2, illustrated is a system level diagram of an embodiment of a communication system including a base station 210 and wireless communication devices (e.g., user equipment) 260, 270 that provides an environment for application of the principles of the present invention. The communication system includes the base station 210 coupled by communication path or link 220 (e.g., by a fiber-optic communication path) to a core telecommunications network such as public switched telephone network ("PSTN") 230. The base station 210 is coupled by wireless communication paths or links 240, 250 to the wireless communication devices 260, 270, respectively, that lie within its cellular area 290.

In operation of the communication system illustrated in FIGURE 2, the base station 210 communicates with each wireless communication device 260, 270 through control and data communication resources allocated by the base station 210 over the communication paths 240, 250, respectively. The control and data communication resources may include frequency and time-slot communication resources in frequency division duplex ("FDD") and/or time division duplex ("TDD") communication modes. While the wireless communication devices 260, 270 are part of a primary communication system, the wireless communication devices 260, 270 and other devices such as machines (not shown) may be a part of a secondary communication system to participate in, without limitation, device-to-device and machine-to-machine communications or other communications.

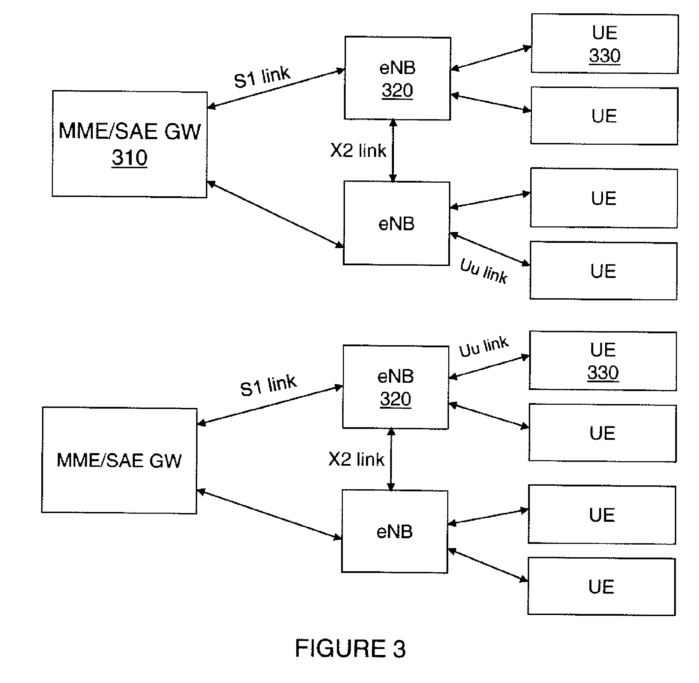

Turning now to FIGURE 3, illustrated is a system level diagram of an embodiment of a communication system including a wireless communication system that provides an environment for the application of the principles of the present invention. The wireless communication system may be configured to provide evolved UMTS terrestrial radio access network ("E-UTRAN") universal mobile telecommunications services. A mobile management entity/system architecture evolution gateway ("MME/SAE GW," one of which is designated 310) provides control functionality for an E-UTRAN node B (designated "eNB," an "evolved node B," also referred to as a "base station," one of which is designated 320) via an S1 communication link (ones of which are designated "S 1 link"). The base stations 320 communicate via X2 communication links (ones of which are designated "X2 link"). The various communication links are typically fiber, microwave, or other high-frequency metallic communication paths such as coaxial links, or combinations thereof.

The base stations 320 communicate with wireless communication devices such as user equipment ("UE," ones of which are designated 330), which is typically a mobile transceiver carried by a user. Thus, communication links (designated "Uu" communication links, ones of which are designated "Uu link") coupling the base stations 320 to the user equipment 330 are air links employing a wireless communication signal such as, for example, an orthogonal frequency division multiplex ("OFDM") signal. While the user equipment 330 are part of a primary communication system, the user equipment 330 and other devices such as machines (not shown) may be a part of a secondary communication system to participate in, without limitation, device-to-device and machine-to-machine communications or other communications.

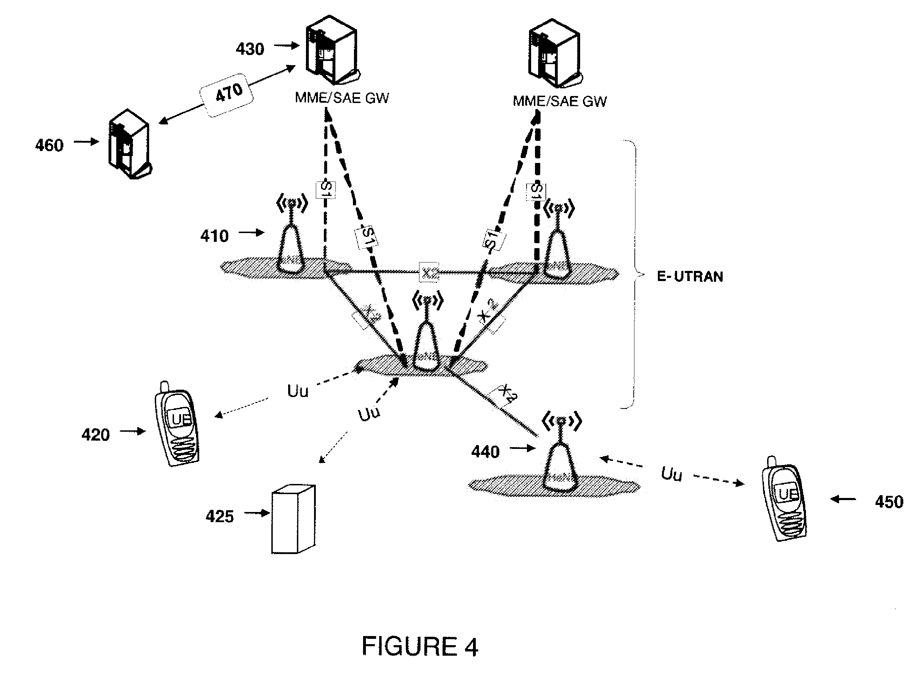

Turning now to FIGURE 4, illustrated is a system level diagram of an embodiment of a communication system including a wireless communication system that provides an environment for the application of the principles of the present invention. The wireless communication system provides an E-UTRAN architecture including base stations (one of which is designated 410) providing E-UTRAN user plane (packet data convergence protocol/radio link control/media access control/physical) and control plane (radio resource control) protocol terminations towards wireless communication devices such as user equipment 420 and other devices such as machines 425 (e.g., an appliance, television, meter, *etc.).* The base stations 410 are interconnected with X2 interfaces or communication links (designated "X2"). The base stations 410 are also connected by S 1 interfaces or communication links (designated "S1") to an evolved packet core ("EPC") including a mobile management entity/system architecture evolution gateway ("MME/SAE GW," one of which is designated 430). The S1 interface supports a multiple entity relationship between the mobile management entity/system architecture evolution gateway 430 and the base stations 410. For applications supporting inter-public land mobile handover, inter-eNB active mode mobility is supported by the mobile management entity/system architecture evolution gateway 430 relocation via the S1 interface.

The base stations 410 may host functions such as radio resource management. For instance, the base stations 410 may perform functions such as Internet protocol ("IP") header compression and encryption of user data streams, ciphering of user data streams, radio bearer control, radio admission control, connection mobility control, dynamic allocation of communication resources to user equipment in both the uplink and the downlink, selection of a mobility management entity at the user equipment attachment, routing of user plane data towards the user plane entity, scheduling and transmission of paging messages (originated from the mobility management entity), scheduling and transmission of broadcast information (originated from the mobility management entity or operations and maintenance), and measurement and reporting configuration for mobility and scheduling. The mobile management entity/system architecture evolution gateway 430 may host functions such as distribution of paging messages to the base stations 410, security control, termination of user plane packets for paging reasons, switching of the user plane for support of the user equipment mobility, idle state mobility control, and system architecture evolution bearer control. The user equipment 420 and machines 425 receive an allocation of a group of information blocks from the base stations 410.

Additionally, the ones of the base stations 410 are coupled to a home base station 440 (a device), which is coupled to devices such as user equipment 450 and/or machines (not shown) for a secondary communication system. The base station 410 can allocate secondary communication system resources directly to the user equipment 420 and machines 425, or to the home base station 440 for communications (e.g., local communications) within the secondary communication system. For a better understanding of home base stations (designated "HeNB"), see 3 GPP TS 32.871 v.9.1.0 (2010-03), which is incorporated herein by reference. While the user equipment 420 and machines 425 are part of a primary communication system, the user equipment 420, machines 425 and home base station 440 (communicating with other user equipment 450 and machines (not shown)) may be a part of a secondary communication system to participate in, without limitation, device-to-device and machine-to-machine communications or other communications.

The mobile management entity/system architecture evolution gateway 430 may communicate over the Internet backbone with a remote server 460 that may be hosted in a corporate network to provide access for end users to data such as files, live broadcasts, or other information requested by a user equipment or other endpoint communication device. The remote server 460 can be a streaming media server or a world wide web server. A communication link 470 such as a digital subscriber line (e.g., an asymmetrical digital subscriber line ("ADSL"), a symmetrical digital subscriber line ("SDSL") and similar) between the remote server 460 and the mobile management entity/system architecture evolution gateway 430 may provide a limited data rate for a particular user equipment that is substantially less than a data rate for a communication path between that user equipment and its serving base station. The communication path may include routers that are part of public Internet. Thus, the excess data rate of the communication path between the user equipment and the serving base station is a wasted communication resource that could potentially be utilized at the serving base station to accommodate the communication needs of another user equipment or other endpoint communication device.

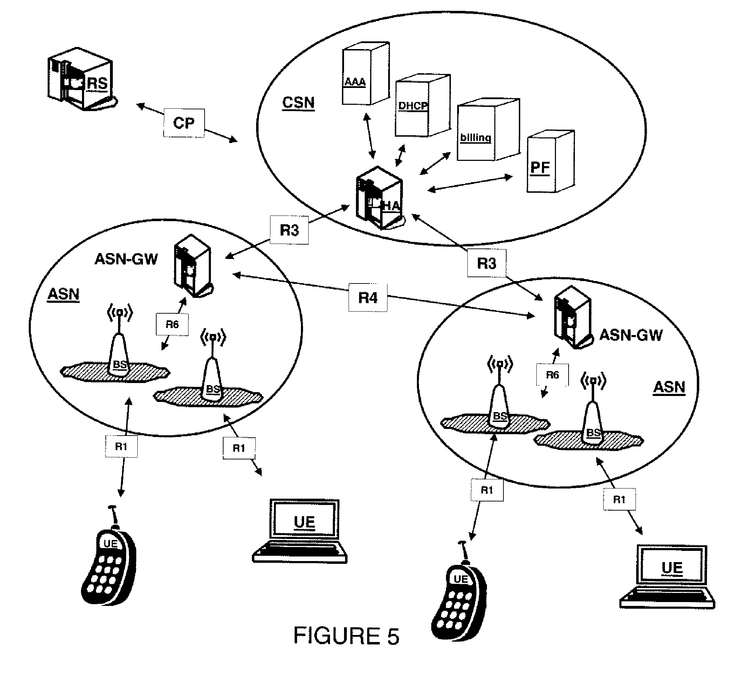

Turning now to FIGURE 5, illustrated is a system level diagram of an embodiment of a communication system including a wireless communication system that provides an environment for the application of the principles of the present invention. The illustrated embodiment provides a communication system such as a WiMAX communication system typically configured according to IEEE Standard 802.16. The WiMAX communication system includes a core service network ("CSN") including a home access ("HA") server. The core service network provides authentication, authorization, and accounting ("AAA") functions via an AAA server, dynamic host configuration protocol ("DHCP") functions via a DHCP server, billing functions via a billing server, and a policy function ("PF") server. The AAA server validates user credentials, determines functions permissible under a given set of operating conditions and tracks network utilization for billing and other purposes. The DHCP server is used to retrieve network configuration information such as Internet protocol address assignments. The policy function server coordinates various network resources to provide requested services to authorized subscribers, and is responsible for identifying policy rules for a service that a subscriber may intend to use.

The WiMAX communication system further includes access service networks ("ASNs") that include ASN gateways (ASN-GWs") and base stations ("BSs") that provide wireless communication with user equipment ("UE"). A home access server communicates with the access service networks over R3 interfaces, and the ASN gateways communicate with other ASN gateways over R4 interfaces. The ASN gateways communicate with base stations over R6 interfaces. The base stations communicate with the user equipment or other endpoint communication devices over wireless R1 interfaces.

The base stations may communicate over the Internet backbone through the core service network with a remote server ("RS") that may be hosted in a corporate network to provide access for end users to data such as files, live broadcasts, or other information requested by a user equipment or other endpoint communication device. The remote server can be a streaming media server or a world wide web server. A communication path ("CP") between the remote server and the core service network may provide a limited data rate for a particular user equipment that is substantially less than a data rate for a communication path between that user equipment and its serving base station. The communication path may include routers that are part of public Internet. Thus, the excess data rate of the communication path between the user equipment and the serving base station is a wasted communication resource that could potentially be utilized at the serving base station to accommodate the communication needs of another user equipment or other endpoint communication device.

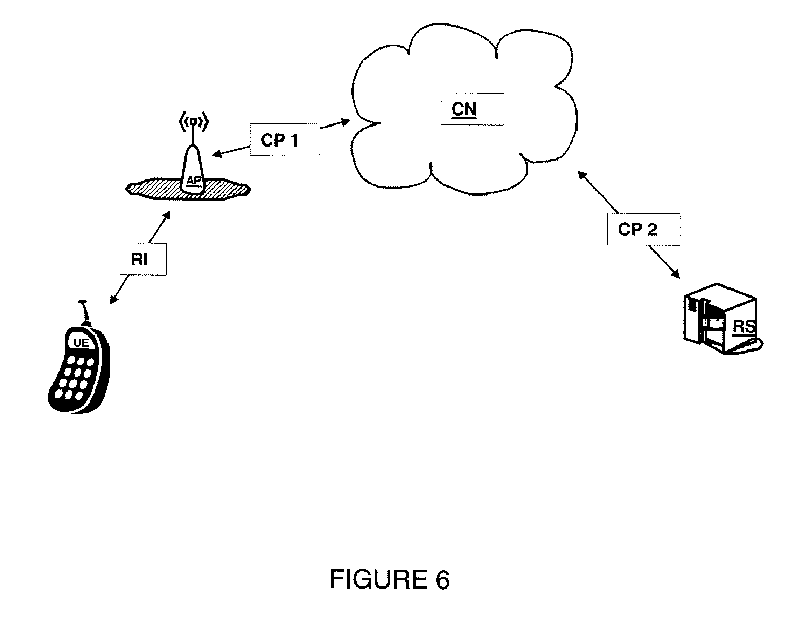

Turning now to FIGURE 6, illustrated is a system level diagram of an embodiment of a communication system including a wireless communication system that provides an environment for the application of the principles of the present invention. The communication system includes a user equipment ("UE") coupled via a radio interface ("RI") to at least one access point (or base station) ("AP"), which is coupled via a first communication path ("CP 1") to a communication network ("CN") including an Internet backbone. The user equipment is a multi-mode communication device with the capability to connect with a plurality of access points ("APs") or base stations supporting cellular, WLAN or other communication systems or access technologies. The communication network is coupled to a remote server ("RS") via a second communication path ("CP2").

The remote server may be hosted in a corporate network to provide access for end users to data such as files, live broadcasts, or other information requested by a user equipment or other endpoint communication device. As an example, the remote server can be a streaming media server or a world wide web server. One or both of the first and second communication paths or links between the access point and the remote server may provide a limited data rate for a particular user equipment that is substantially less than a data rate for a communication path (or radio interface) between that user equipment and the access point. As an example, the maximum data rate allowed by wireless local area network ("WLAN") IEEE standard 802.11g is 54 megabits per second ("Mb/s"), whereas the more recent IEEE standard 802.11n provides 100-600 Mb/s. However, if the WLAN access point is connected to an endpoint communication device such as a remote server through a 1 Mb/s asymmetrical digital subscriber line ("ADSL") cable, the maximum data rate experienced by the user equipment is the maximum data rate of 1 Mb/s provided by the ADSL cable. The communication path may also include routers that are part of public Internet. Thus, the excess data rate of the communication path between the user equipment and the serving access point or base station is a wasted communication resource that could potentially be utilized at the serving access point or base station to accommodate the communication needs of another user equipment or other endpoint communication device.

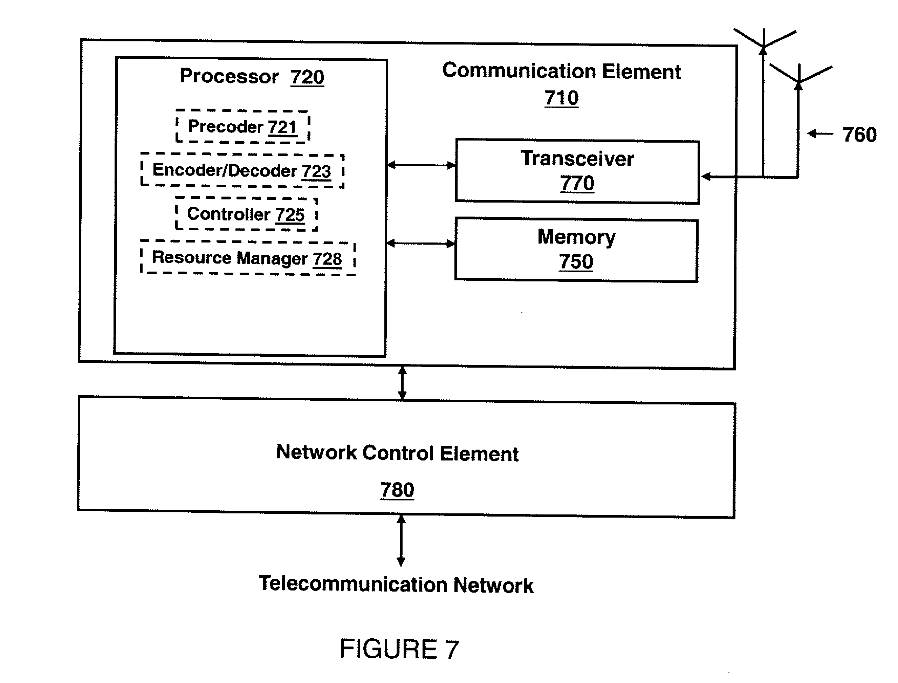

Turning now to FIGURE 7, illustrated is a system level diagram of an embodiment of a communication element 710 of a communication system for application of the principles of the present invention. The communication element or device 710 may represent, without limitation, a base station, a wireless communication device (e.g., a subscriber station, terminal, mobile station, user equipment, machine), a network control element, a communication node, or the like. The communication element 710 includes, at least, a processor 720, memory 750 that stores programs and data of a temporary or more permanent nature, an antenna 760, and a radio frequency transceiver 770 coupled to the antenna 760 and the processor 720 for bidirectional wireless communication. The communication element 710 may provide point-to-point and/or point-to-multipoint communication services.

The communication element 710, such as a base station in a cellular network, may be coupled to a communication network element, such as a network control element 780 of a public switched telecommunication network ("PSTN"). The network control element 780 may, in turn, be formed with a processor, memory, and other electronic elements (not shown). The network control element 780 generally provides access to a telecommunication network such as a PSTN. Access may be provided using fiber optic, coaxial, twisted pair, microwave communication, or similar link coupled to an appropriate link-terminating element. A communication element 710 formed as a wireless communication device is generally a self-contained device intended to be carried by an end user.

The processor 720 in the communication element 710, which may be implemented with one or a plurality of processing devices, performs functions associated with its operation including, without limitation, precoding of antenna gain/phase parameters (precoder 721), encoding and decoding (encoder/decoder 723) of individual bits forming a communication message, formatting of information, and overall control (controller 725) of the communication element, including processes related to management of communication resources (resource manager 728). Exemplary functions related to management of communication resources include, without limitation, hardware installation, traffic management, performance data analysis, tracking of end users and equipment, configuration management, end user administration, management of wireless communication devices, management of tariffs, subscriptions, security, billing and the like. For instance, in accordance with the memory 750, the resource manager 728 is configured to allocate communication resources (e.g., time and frequency communication resources) for transmission of voice communications and data to/from the communication element 710 and to format messages including the communication resources therefor in a communication system.

When the communication element 710 is operable as a base station, the processor 720 (e.g., resource manager 728) in accordance with the memory 750 is configured to determine an estimated data rate (e.g., including a throughput and a data latency) between a first endpoint communication device (e.g., a user equipment) and a second endpoint communication device (e.g., another user equipment or a remote server such as streaming media server or a world wide web server), and select *(e.g.,* set, adjust, modify, *etc.*) at least one of a radio interface and a radio interface data rate from the first endpoint communication device in accordance with the estimated data rate. In accordance therewith, the processor 720 in accordance with the memory 750 is configured to redistribute a communication resource previously allocated to the first endpoint communication device. The processor 720 in accordance with the memory 750 may re-estimate the estimated data rate between the first endpoint communication device and the second endpoint communication device after a connection is established therebetween. The estimated data rate may be dependent on at least one intervening communication element between the first and second endpoint communication devices. The estimated data rate may be determined by a data rate of a communication path (e.g., a digital subscriber line) between the communication element 710 and the second endpoint communication device or a throughput of the second endpoint communication device. The processor 720 in accordance with the memory 750 may select at least one of a same or a different radio interface and radio interface data rate from the first endpoint communication device in accordance with the estimated data rate.

When the communication element 710 is operable as a user equipment, the processor 720 (e.g., resource manager 728) in accordance with the memory 750 is configured to determine an estimated data rate (e.g., including a throughput and a data latency) between the user equipment and an endpoint communication device (e.g., another user equipment or a remote server such as streaming media server or a world wide web server), and initiate a process to select *(e.g.,* set, adjust, modify, *etc.)* at least one of a radio interface and a radio interface data rate from the user equipment to provide at least the estimated data rate. In accordance therewith, the processor 720 in accordance with the memory 750 is configured to re-estimate the estimated data rate between the user equipment and the endpoint communication device after a connection is established therebetween, and re-initiate the process to select at least one of a same or a different radio interface and radio interface data rate from the user equipment to provide at least the estimated data rate. The processor 720 in accordance with the memory 750 may provide a scheduled message (or report) of the estimated data rate for transmission to a base station serving the user equipment, and enable transmission of the message to the base station serving the user equipment. The estimated data rate may be dependent on at least one intervening communication element between the user equipment and the endpoint communication device. The estimated data rate may be determined by a data rate of a communication path between an intervening base station and the endpoint communication device or a throughput of the endpoint communication device.

The execution of all or portions of particular functions or processes related to management of communication resources may be performed in equipment separate from and/or coupled to the communication element 710, with the results of such functions or processes communicated for execution to the communication element 710. The processor 720 of the communication element 710 may be of any type suitable to the local application environment, and may include one or more of general-purpose computers, special purpose computers, microprocessors, digital signal processors ("DSPs"), field-programmable gate arrays ("FPGAs"), application-specific integrated circuits ("ASICs"), and processors based on a multi-core processor architecture, as non-limiting examples.

The transceiver 770 of the communication element 710 modulates information on to a carrier waveform for transmission by the communication element 710 via the antenna(s) 760 to another communication element. The transceiver 770 demodulates information received via the antenna(s) 760 for further processing by other communication elements. The transceiver 770 is capable of supporting duplex operation for the communication element 710. It should be understood that the transceiver 770 may handle different types of communications (such as a cellular communication and a WLAN communication) or the communication element 710 may include multiple transceivers, wherein each transceiver handles a different type of communication. As mentioned above, the system as described herein allows for switching between different radio interfaces or types of communications such as between 2G (e.g., global system for mobile communications ("GSM")/general packet radio service ("GPRS")/enhanced GPRS ("EGPRS")/code division multiple access ("CDMA")/CDMA2000), 3G (e.g., UMTS, CDMA2000, evolution-data optimized ("EV-DO")) and 4G (LTE) communication systems.

The memory 750 of the communication element 710, as introduced above, may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. The programs stored in the memory 750 may include program instructions or computer program code that, when executed by an associated processor, enable the communication element 710 to perform tasks as described herein. Of course, the memory 750 may form a data buffer for data transmitted to and from the communication element 710. Exemplary embodiments of the system, subsystems, and modules as described herein may be implemented, at least in part, by computer software executable by processors of, for instance, the wireless communication device and the base station, or by hardware, or by combinations thereof. The systems, subsystems and modules may be embodied in the communication element 710 as illustrated and described herein.

In a communication system, radio access network load, frequency usage, packet priority, and other performance and communication parameters should be efficiently allocated to provide the level of service necessary for a given data connection. Any further communication resource that is allocated is generally wasted. Such unnecessarily reserved communication resources can potentially be employed by other user equipment in the communication system or for other purposes. When a user equipment connects to another communication element or device such as a network server or even another user equipment, the data rate or other communication quality measure is not necessarily limited or otherwise determined by radio access network capability, but rather can be limited by the network load, server load, or other variable or static factors.

The momentarily available physical radio data rate (e.g., latency, upload and/or download data rate, throughput) can be roughly estimated, for example, by knowing the radio type or system such as WLAN, 3GPP LTE, general packet radio service ("GPRS"), high speed packet access ("HSPA"), radio signal level, or by channel measurements. The estimated physical radio data rate (or estimated data rate) can be determined either by the user equipment or by its access point/serving base station.

The radio interface data rate that is actually experienced by the user equipment may be quite different from the underlying data rate that certain elements of the communication system can provide. For example, the maximum data rate allowed by wireless local area network ("WLAN") IEEE standard 802.11 g is 54 megabits per second ("Mb/s"), whereas the more recent IEEE standard 802.11n provides 100-600 Mb/s. However, if the WLAN access point is connected to an endpoint communication device such as a server through a 1 Mb/s asymmetrical digital subscriber line ("ADSL") cable, the maximum data rate experienced by the user equipment is the maximum data rate of 1 Mb/s provided by the ADSL cable. As another example, during the daytime in the United States, a user-accessed communication device such as a server may operate under high load. As a result, instead of achieving an expected HSDPA radio interface data rate of 14.4 Mb/s, the user equipment may experience a very low data rate of 0.2 Mb/s.

Currently, the radio interface data rate is often allocated by the communication system at a maximum level. Consequently, the originating endpoint communication device sends data as rapidly as possible to the radio access point or serving base station (e.g., a cellular or WLAN access point or base station). Current communication radio system mechanisms do change the allocated data rate over the radio interface, but these mechanisms are also not aware of end-to-end bandwidth needs, capability, or availability.

As introduced herein, the data connection speed/data rate experienced between a device such as a user equipment and another communication device such as a server or even another user equipment as seen by the user equipment is estimated. The term data rate as understood herein may include other quality-of-service parameters such as latency, and download and upload throughput. For example, the data rate of the current connection from the user equipment to the accessed communication device including latency is estimated. Alternatively, the data rate before an established connection is estimated. The allocated radio interface data rate is then selected (e.g., limited or otherwise adjusted) to be at least the estimated data rate (e.g., or slightly higher). The bandwidth or other communication resource that is released by appropriately setting the radio interface data rate of the current connection can be advantageously redistributed for other use or to other user equipment. Advantageously, all user equipment are allocated an appropriate radio interface data rate with latency that their respective applications need or can use. As a further alternative, a communication path or radio interface between the user equipment and the another communication device or an intervening base station can be selected (e.g., altered) to provide at least (about) the estimated data rate, or slightly higher than the estimated data rate, such as by terminating a cellular or WLAN communication path and substituting a Bluetooth communication path as an alternative.

The actual end-to-end connection speed is often dependent on a limiting, intervening communication element such as an ADSL cable in the route between endpoint communication devices. Such bottlenecks are often static; for example, a 1 Mb/s ADSL cable does not generally provide a higher data rate than 1 Mb/s. This limiting data rate can be estimated when an intervening ADSL cable is identified. Thus, the WLAN or cellular access point or base station may allocate a data rate of at least 1 Mb/s (such as 1.2 or 1.5 Mb/s) for the originating endpoint communication device. Naturally, this assumption should be tested from time to time by channel measurements. Other bottlenecks can be more dynamic (i.e., they can be time varying). For example, during the night, a connection by a user equipment to a nearby server that might be supplying a file or a program update is more likely to exhibit a higher data rate than to a distant server operating during the middle of the day. The data rate bottleneck can be estimated based on the time of day and location of the accessed server. Further examples of possible dynamic bottlenecks include the user equipment changing from a 3.5G connection (a 3GPP UMTS-high speed packet access ("HSPA") generation 3.5 connection) to a 2.5G connection (a 3GPP GSM/GPRS generation 2.5 connection), a WLAN access point changing the parameters of radio frequency ("RF") modulation, or the user equipment changing from WLAN to an Internet protocol ("IP") over Bluetooth connection.

Some bottlenecks can be totally dynamic. For example, a server may be temporarily encumbered by a heavy load. To deal with variable data rates resulting from such variable channel issues may require repeating channel data rate measurements as or after the channel is accessed. The speed/data rate measurement can be done separately or simultaneously when the user equipment is using the connection. Naturally, from the data rate variability described above, the critical bottleneck such as produced by an intervening communication element that produces a minimum connection speed is the one that determines the connection speed experienced by the user equipment. As illustrated by the examples described herein, the bottleneck (minimum connection speed/data rate in terms of bit rate of a communication path element) is the one that determines the radio interface data rate for the user equipment. An end-to-end connection may involve a number of intermediary steps. As an example, a single web page request by an originating endpoint communication device may include a client, access point (or base station), router, web proxy, multitude of routers, SQUID web cache, web server, SQUID web cache, multitude of routers, web proxy, router, access point and client (on the originating endpoint communication device). It should be noted that the bottleneck in terms of latency depends on the delay of the communication path from the originating endpoint communication device (or user equipment) to, for instance, an accessed server and is the one that determines the radio interface data rate for the user equipment. In other words, latency is cumulative and depends on the entire communication path.

By utilizing an estimated end-to-end data rate, radio parameters can be selected or adjusted or a communication path can be selected or altered so that the speed/data rate including a quality-of-service parameter such as latency over a communication path (including a radio interface) is sufficiently high that the expected end-to-end speed is achieved. However, the speed over the communication path from the user equipment does not need to be substantially higher than the expected end-to-end speed. Radio access parameters and allocated communication resources can be selected, tuned or otherwise altered either statically before establishing a connection and/or dynamically during the connection. The selection of static verses dynamic radio access parameter selecting, tuning or alteration can depend on the used connection speed estimate or estimated data rate.

Adjustment of the radio access parameters can be implemented at either end of the radio interface, at both ends, or with a combination of operations at both ends. For example, a user equipment may provide the currently estimated end-to-end speed/data rate to an access point/base station and, based on that, the access point/base station selects or changes radio access parameters such as the radio interface or the radio interface data rate. The access point/base station may estimate the end-to-end speed/data rate and inform that speed/data rate to the user equipment. Examples of radio access parameter/allocated communication resource tuning could be a low data rate need serviced by GPRS/global system for mobile communication ("GSM") system instead of 3G communication system, and actively changing to a lower data rate version of WLAN if the access point/base station supports a lower data rate.

Another example is better radio spectrum usage. Different cellular radio wireless standards (e.g., 2G verses 3G communication systems) use different carrier frequencies. For example, in Europe, 2G standards employ carrier frequencies at about 900 MHz and 1800 MHz, whereas 3G standards employ carrier frequencies of about 2100 MHz (and in some countries, also 900 MHz). In the case wherein 2G performance is sufficient for the achieved end-to-end data rate, then changing from 3G to 2G would save 3G radio spectrum. At the same time, however, more 2G frequencies would be used. Thus, there is a tradeoff, but the added flexibility to configure the wireless connection can be advantageous for conservation of communication resources. In another example, the communication mode over a portion of the communication path could be changed by the user equipment from operation under IEEE standard 802.11 g to a more localized communication mode such as Bluetooth (employing Internet protocol ("IP") over Bluetooth) or ZigBee (employing IP over ZigBee) when Bluetooth/ZigBee would enable a sufficient data rate. This allows both power savings and savings of valuable 802.11 g radio spectrum.

Thus, a user equipment estimates a data rate between itself and another communication element or device, and initiates a process to select (or alter) a communication path (e.g., a radio interface) or a radio interface data rate between the user equipment and an intervening access point or base station to provide a data rate at or slightly greater than the estimated data rate. This process can be repeated during the network connection. Alternatively, the user equipment initiates transmission of a message to its serving base station that includes the estimated data rate, and that includes a request for an adjustment of the radio interface or the radio interface data rate of a communication path between the user equipment and the serving base station.

In another example, the communication mode could be changed from IEEE standard 802.11g to the older, less bandwidth-intense IEEE standard 802.11b, for example, when downloading data when the user equipment is only receiving data such as listening to music that employs a bandwidth of 320 kilo bits per second ("kb/s"). The aforementioned standards and all references and standards provided herein are incorporated herein by reference. If the case is considered in which 802.11g and 802.11 b are receiving packets of the same size, 802.11 b actually requires more energy (as measured in joules/bit), since it needs to be active for a longer time even though it consumes about 30 percent less power, as described in "Low Power Advantage of 802.11a/g vs. 802. 11b," December 2003, which is incorporated herein by reference. However, in practice the power consumption of a transceiver in a communication device is dependent on how long the receiver is "awake," (i.e., is actively receiving a signal from a base station). Thus, it is recognized that some WLAN receivers are awake for a time interval that is much longer than just the time of receiving a data packet. When a beacon message from a base station informs a user equipment that it is about to receive data over a WLAN communication channel, the receiver thereof may need to be awake during one or several beacon time window(s) (beacon time window may be e.g., 100 milliseconds ("ms") in some user equipment). If the 802.11 b data rate and time window size is sufficient to receive 320 kb/s, that would allow a power savings. Using the IEEE standard 802.11g, a receiver would be only listening but consuming power during most of the time window.

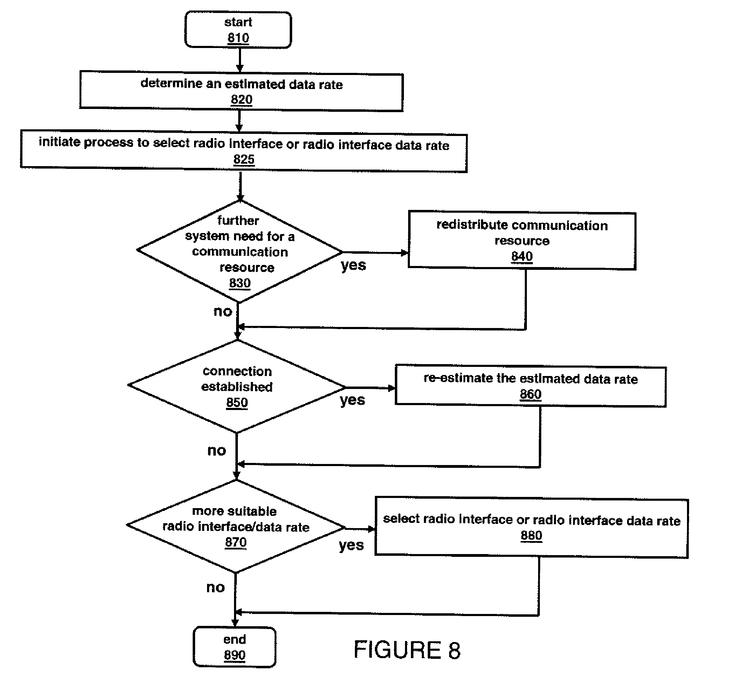

Turning now to FIGURE 8, illustrated is a flowchart demonstrating an exemplary method of operating a base station (or access point) according to the principles of the present invention. The method starts at step or module 810. At a step or module 820, the base station determines an estimated data rate between a first endpoint communication device and a second endpoint communication device via the base station. At a step or module 825, the base station selects *(e.g.,* sets, adjust, *etc.)* at least one of a radio interface and a radio interface data rate from the first endpoint communication device to be about or slightly higher than the estimated data rate. The second endpoint communication device can be, as examples, another user equipment, a streaming media server or a world wide web server. The estimated data rate may be dependent on at least one intervening communication element such as a server between the first endpoint communication device and the second endpoint communication device, or by the data rate of a communication path, such as a digital subscriber line, therebetween. The data rate may include consideration of data latency and download/upload throughput. Ideally, the selected radio interface data rate is at least as great as but about the same as the estimated data rate, or slightly higher.

At step or module 830, the base station determines if there is a further need in the communication system for a communication resource. If there is a further need, in step or module 840, the base station redistributes a communication resource previously allocated to the first endpoint communication device as a result of selecting the radio interface or the radio interface data rate from the first endpoint communication device to be at least the estimated data rate. In a step or module 850, the base station determines if a connection between first and second endpoint communication devices has been established. If the connection has been established, then, in a step or module 860, the base station further re-estimates the estimated data rate between the first endpoint communication device and the second endpoint communication device via the base station. In a step of module 870, the base station attempts to identify if there is a more suitable radio interface of radio interface data rate (e.g., a modulation and coding scheme) for the communication path between the first endpoint communication device and the second endpoint communication device. If a better suited radio interface or radio interface data rate is available, then, in step or module 880, the base station selects a different radio interface or radio interface data rate from the first endpoint communication device as a function of the estimated data rate. The method ends at a step or module 890.

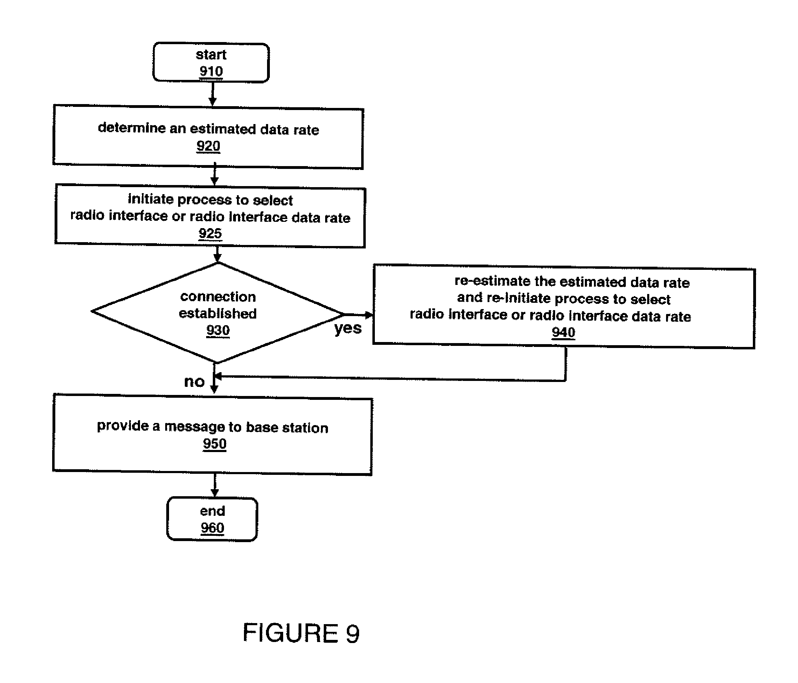

Turning now to FIGURE 9, illustrated is a flowchart demonstrating an exemplary method of operating a user equipment according to the principles of the present invention. The method starts at a step or module 910. At a step or module 920, the user equipment determines an estimated data rate between the user equipment and an endpoint communication device. At a step or module 925, the user equipment initiates a process to select *(e.g.,* sets, adjust, *etc.)* at least one of a radio interface and a radio interface data rate from the user equipment (via, for instance, an access point/base station) to provide at least the estimated data rate. The radio interface path can be selected either by changing the parameters of the air interface with the current access point/base station or by changing to a different access point/base station. For example, if the access point/base station is changed (e.g., from a WLAN access point to an IP over Bluetooth access point), then a different air interface is employed with the different access point/base station, and perhaps with a different communication path to the endpoint communication device. Thus, the user equipment and the endpoint communication device remain the same, but any element of the communication path therebetween may be changed. Reference to changing the communication path may include changing parameters of the radio interface with the current access point/base station (e.g., a modulation and coding scheme). The estimated data rate may be dependent on at least one intervening communication element between the user equipment and the endpoint communication device. The estimated data rate my depend on the data rate of a communication path, such as a digital subscriber line, between the access point/base station and the endpoint communication device, or a throughput of the endpoint communication device. The data rate may include consideration of data latency and throughput. The selected radio interface data rate is at least as great as but about the same as the estimated data rate, or slightly higher.

In a step or module 930, the user equipment determines if a connection has now been established between the user equipment and the endpoint communication device. If a connection has been established, in a step or module 940, the user equipment re-estimates the estimated data rate between the user equipment and the endpoint communication device and re-initiate the process to select at least one of a same or a different radio interface and radio interface data rate from the user equipment to provide at least said estimated data rate. In a step or module 950, the user equipment provides a message (or report, which may be periodically scheduled) of the estimated data rate for transmission to a base station serving the user equipment and enables transmission of the message to the base station serving the user equipment. The method ends at step or module 960.

Allocation of communication resources by processes introduced herein enables new possibilities to tune allocation of physical radio communication resources depending on radio capabilities and access point/base station usage. Power savings in the physical radio and better usage of radio spectrum advantageously can result. In accordance therewith, the system as described herein is configured to determine an estimated data rate between a first endpoint communication device and a second endpoint communication device, and select at least one of a radio interface and a radio interface data rate from the first endpoint communication device in accordance with the estimated data rate.

Program or code segments making up the various embodiments of the present invention may be stored in a computer readable medium or transmitted by a computer data signal embodied in a carrier wave, or a signal modulated by a carrier, over a transmission medium. For instance, a computer program product including a program code stored in a computer readable medium (e.g., a non-transitory computer readable medium) may form various embodiments of the present invention. The "computer readable medium" may include any medium that can store or transfer information. Examples of the computer readable medium include an electronic circuit, a semiconductor memory device, a read only memory ("ROM"), a flash memory, an erasable ROM ("EROM"), a floppy diskette, a compact disk ("CD")-ROM, an optical disk, a hard disk, a fiber optic medium, a radio frequency ("RF") link, and the like. The computer data signal may include any signal that can propagate over a transmission medium such as electronic communication network communication channels, optical fibers, air, electromagnetic links, RF links, and the like. The code segments may be downloaded via computer networks such as the Internet, Intranet, and the like.

As described above, the exemplary embodiment provides both a method and corresponding apparatus consisting of various modules providing functionality for performing the steps of the method. The modules may be implemented as hardware (embodied in one or more chips including an integrated circuit such as an application specific integrated circuit), or may be implemented as software or firmware for execution by a computer processor. In particular, in the case of firmware or software, the exemplary embodiment can be provided as a computer program product including a computer readable storage structure embodying computer program code (i.e., software or firmware) thereon for execution by the computer processor.

Although the present invention and its advantages have been described in detail, it should be understood that various changes, substitutions and alterations can be made herein without departing from the spirit and scope of the invention as defined by the appended claims. For example, many of the features and functions discussed above can be implemented in software, hardware, or firmware, or a combination thereof. Also, many of the features, functions and steps of operating the same may be reordered, omitted, added, *etc.,* and still fall within the broad scope of the present invention.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method, comprising:
determining an estimated data rate between a first endpoint communication device and a second endpoint communication device; and
selecting at least one of a radio interface and a radio interface data rate from said first endpoint communication device in accordance with said estimated data rate.

2. The method as recited in Claim 1 further comprising redistributing a communication resource previously allocated to said first endpoint communication device.

3. The method as recited in Claim 1 further comprising re-estimating said estimated data rate between said first endpoint communication device and said second endpoint communication device after a connection is established therebetween.

4. The method as recited in Claim 3 further comprising selecting at least one of a radio interface and radio interface data rate from said first endpoint communication device in accordance with said estimated data rate.

5. The method as recited in Claims 1 to 4 wherein said estimated data rate is dependent on at least one intervening communication element between said first endpoint communication device and said second endpoint communication device.

6. The method as recited in Claim 1 to 5 wherein said estimated data rate is determined by a data rate of a communication path between a base station and said second endpoint communication device or a throughput of said second endpoint communication device.

7. An apparatus, comprising:
a processor; and
memory including computer program code,
said memory and said computer program code configured to, with said processor, cause said apparatus to perform at least the following:
determine an estimated data rate between said apparatus and an endpoint communication device; and
initiate a process to select at least one of a radio interface and a radio interface data rate from said apparatus to provide at least said estimated data rate.

8. The apparatus as recited in Claim 7 wherein said memory and said computer program code is further configured to, with said processor, cause said apparatus to re-estimate said estimated data rate between said apparatus and said endpoint communication device after a connection is established therebetween.

9. The apparatus as recited in Claim 8 wherein said memory and said computer program code is further configured to, with said processor, cause said apparatus to re-initiate said process to select at least one of a radio interface and radio interface data rate from said apparatus to provide at least said estimated data rate.

10. The apparatus as recited in Claim 7 wherein said memory and said computer program code is further configured to, with said processor, cause said apparatus to provide a message of said estimated data rate for transmission to a base station serving said apparatus, and enable transmission of said message to said base station.

11. The apparatus as recited in Claims 7 to 10 wherein said estimated data rate is dependent on at least one intervening communication element between said apparatus and said endpoint communication device.

12. The apparatus as recited in Claim 7 wherein said estimated data rate is determined by a data rate of a communication path between an intervening base station and said endpoint communication device or a throughput of said second endpoint communication device.

13. A computer program product comprising program code stored in a computer readable medium configured to:
determine an estimated data rate between a first endpoint communication device and a second endpoint communication device; and
initiate a process to select at least one of a radio interface and a radio interface data rate from said first endpoint communication device to provide at least said estimated data rate.

14. The computer program product as recited in Claim 13 wherein said program code stored in said computer readable medium is further configured to re-estimate said estimated data rate between said first endpoint communication device and said second endpoint communication device after a connection is established therebetween.

15. The computer program product as recited in Claim 14 wherein said program code stored in said computer readable medium is further configured to re-initiate said process to select at least one of a radio interface and radio interface data rate from said first endpoint communication device to provide at least said estimated data rate.
